# EUROPÄISCHE PATENTSCHRIFT

(11) **EP 1 022 508 B1**
(45) Veröffentlichungstag und Bekanntmachung des Hinweises auf die Patenterteilung: **14.04.2004**
(21) Anmeldenummer: 99101176.8
(22) Anmeldetag: 22.01.1999
(51) Int. Cl.: F16M 11/32

(54) **Verriegelbares Stativ**
Stand with lock device
Pied verrouillable

(43) Veröffentlichungstag der Anmeldung: 26.07.2000
(73) Patentinhaber: Leica Geosystems AG, 9435 Heerbrugg (CH)
(72) Erfinder: Schwärzler, Johannes Gallus, Dipl.-Ing., 6923 Lauterach (AT)
(74) Vertreter: Kaminski, Susanne

(56) Entgegenhaltungen:
- DE-C- 412 715
- US-A- 5 253 833

## Beschreibung

Die Erfindung bezieht sich auf ein Stativ mit mindestens drei Beinen, deren oberer Teil ausklappbar bzw. kippbar am Stativkopf befestigt ist und deren unterer Teil im oberen Teil teleskopartig verschiebbar ist, wobei Verriegelungsmittel vorgesehen sind, um - in Transportstellung des Stativs - die Beine gegenseitig zu arretieren.

Ein herkömmliches Dreibeinstativ, beispielsweise ein Stativ der Serie GST 120-9 der Anmelderin, weist an den Beinen angebrachte Verriegelungsmittel auf, um diese für den Transport miteinander zu verriegeln und vor dem Auseinanderfallen zu sichern. Die Verriegelungsmittel umfassen an jedem Bein einen am Stiefel angebrachten Haken und einen Bügel, der an einem Klemmband, durch welches der untere, verschiebbare Teil im oberen feststehenden Teil des Beins festklemmbar ist, angebracht ist. Zur Verriegelung werden die Klemmbänder gelöst und die Haken eines jeden Beins werden über den Bügel des benachbarten Beins nacheinander eingesetzt. Anschliessend werden die Beine eingefahren und die Klemmbänder festgestellt, wodurch Haken und Bügel im Eingriff stehen und ein Auseinanderfallen der Beine verhindern. Die Verriegelungsmittel sind an allen drei Beinen in gleicher Weise ausgeführt.

Nachteilig ist, dass alle drei Klemmbänder ausreichend fest zu klemmen sind. Die Klemmschrauben der Klemmbänder werden dann festgezogen oder gelöst, wenn die Beine gegenseitig eingehakt sind. Ausserdem könnten aufgrund von Erschütterungen während des Transports diese Schrauben gelockert werden und sich sogar lösen. Wegen des beengten Raums in Transportstellung dürfen die Klemmschrauben eine maximale Grösse nicht überschreiten, wodurch die aufzubringende Feststellkraft begrenzt ist. Die Bedienung der Klemmschrauben ist insbesondere bei Vermessungsarbeiten im Gelände bei kalter Witterung beschwerlich. Ausserdem muss sich eine Bedienperson bücken, um an die jeweiligen Klemmschrauben der Klemmbänder zu gelangen.

Wenn sich eines der Klemmbänder löst, besteht die Gefahr, dass sich ein Bein löst; sollte sich ein weiteres Klemmband lösen, würden alle Beine auseinander klappen.

Die Aufgabe der Erfindung besteht darin, ein Stativ anzugeben, dessen Beine bei hoher Sicherheit einfach und bedienerfreundlich verriegelbar sind.

Diese Aufgabe wird durch ein Stativ gelöst, bei dem die Merkmale des unabhängigen Anspruchs verwirklicht sind.

Vorteilhafte bzw. alternative Ausbildungsvarianten sind durch die Merkmale der abhängigen Ansprüche beschrieben.

Entgegen der punktsymmetrischen Anordnung der Verriegelungsmittel bei herkömmlichen Stativen sind die Verriegelungsmittel der Erfindung nicht punktsymmetrisch ausgeführt. An einem ersten, zentralen Stativbein werden die anderen Stativbeine nach Lösen der Klemmbänder eingehängt. Dann werden die Beine eingefahren, wobei schliesslich nur das Zentralbein im eingefahrenen Zustand festzuklemmen ist. Dadurch sind gleichzeitig alle drei Beine gegen ein Auseinanderfallen und Ausfahren gesichert.

Die Verriegelungsmittel umfassen eine erste Tragplatte am Zentralbein und jeweils weitere Tragplatten an den anderen Beinen. In Ausgestaltung der Erfindung kann die Tragplatte des Zentralbeins Vorsprünge, beispielsweise Zapfen aufweisen, die nach oben zum Stativkopf hin gerichtet sind. Die weiteren Tragplatten der Hilfsbeine weisen zugeordnet Aussparungen, beispielsweise Bohrungen, auf, die auf die Zapfen der ersten Tragplatte des Zentralbeins aufgesetzt werden. Alternativ können die Zapfen aber auch von Bügeln umfasst werden, die den Hilfsbeinen zugeordnet sind. Bei alternativen Ausgestaltungen der Erfindung können nach unten vom Stativkopf weg gerichtete Zapfen an den weiteren Tragplatten der Hilfsbeine angeordnet sein, welche in zugeordnete Bohrungen in der Tragplatte des Zentralbeins eingesetzt werden. Es können in alternativer Ausgestaltung die weiteren Tragplatten der Hilfsbeine auch nach oben zum Stativkopf hin gerichtete Zapfen aufweisen. Zur Verriegelung werden die Hilfsbeine eingeschwenkt, um ihre Tragplatten auf die erste Tragplatte des Zentralbeins aufzusetzen. Ein am oberen feststehenden Abschnitt des Zentralbeins, vorzugsweise am Klemmband befestigter Bügel umgreift beim Einfahren der Stativbeine die Zapfen.

Unter "Tragplatte" im Sinne der Erfindung sind nach innen gerichtete, beliebig geformte Ansatzteile zu verstehen, die in Transportstellung des Stativs miteinander in Eingriff stehen.

Die Tragplatten sind jeweils an den sogenannten Stiefeln der Stativbeine bzw. in deren Bereich befestigt, welche am unteren Ende des verschiebbaren Teils der Beine aufgesetzt sind, um die Stativbeine auf dem Boden aufzusetzen. Die Tragplatten der Hilfsbeine werden erfindungsgemäss im allgemeinen auf die erste Tragplatte des Zentralbeins aufgesetzt, doch können auch Massnahmen vorgesehen sein, die eine stützende Halterung der weiteren Tragplatten über einen entsprechend ausgebildeten, gegebenenfalls an einem dem Klemmband des Zentralbeins zugeordneten, durch alle Tragplatten reichenden und diese in Vertikalstellung fixierenden Dorn ermöglichen. Im eingefahrenen Zustand stehen Zapfen und Bohrungen beziehungsweise Bügel in gegenseitigem Eingriff, so dass ein Herausrutschen bzw. Wegklappen eines oder beider Hilfsbeine vermieden wird. Selbst wenn sich ein Hilfsbein aus der Verriegelung lösen sollte, bleibt das andere Hilfsbein weiterhin fest verriegelt.

Um die Stativbeine in Einfahrstellung zu halten, kann das am unteren Ende des oberen Teils des Zentralbeins angeordnete Klemmband verwendet werden. Ein gesondertes Festklemmen der Hilfsbeine ist nicht erforderlich. Vorteilhafterweise ist in Kombination oder alternativ hierzu eine Arretierung verwendet, die an den oberen zum Stativkopf hin gerichteten Enden der beiden Teile des Zentralbeins ansetzt. Das Klemmband kann zur zusätzlichen Sicherung ebenfalls noch festgeklemmt werden. Zweckmässigerweise ist diese Arretierung ein punktdiskreter Verschluss. Dieser kann beispielsweise eine Klemmfeder mit Aussparung umfassen, in die ein Zapfen eingreift. Dabei kann die Klemmfeder am oberen Ende des oberen Teils des Zentralbeins befestigt sein, der Zapfen am oberen Ende des verschiebbaren Teils des Zentralbeins. In Einfahrstellung schiebt sich die Klemmfeder über den Zapfen, bis dieser in der Aussparung einrastet. Die beiden Komponenten der Arretierung können auch umgekehrt angeordnet werden, indem der Zapfen am oberen Ende des oberen Teils und die Klemmfeder am oberen Ende des unteren verschiebbaren Teils des Zentralbeins befestigt sind. Alternativ kann anstelle der Klemmfeder auch eine Schnappfeder vorgesehen sein, die - insbesondere an der Innenseite des Zentralbein angeordnet - in eine relativ grosse Ausnehmung am oberen Ende des unteren Teils des Zentralbeins eingreift. Vorteilhafterweise sind - gegebenenfalls der Ausnehmung zugeordnet - die Einfahrbewegung und/oder die Ausfahrbewegung der unteren Teile der Beine dämpfende Anschläge vorgesehen. Zur Arretierung der Beine im eingefahrenen Zustand ist ein Bücken der Bedienperson nicht mehr erforderlich.

Eine derartige Arretierung an allen drei Beinen in Kombination mit den an sich bekannten Vorrichtungen zum Verhindern des Ausschwenkens der Beine ist eine besonders einfache Möglichkeit, bestehende Stative auszustatten. Damit wäre das Vorsehen von Tragplatten prinzipiell nicht nötig.

Zweckmässigerweise ist der ersten Tragplatte des Zentralbeins ein Abstandshalter zugeordnet, so dass die Hilfsbeine beim Aufsetzen von deren weiteren Tragplatten auf die Tragplatte des Zentralbeins im erforderlichen Abstand vom Zentralbein gehalten werden. Ein gegenseitiges Eingreifen der Zapfen in die Bohrungen beziehungsweise den Arretierungsbügel ist somit schnell und exakt durchführbar. Der Abstandshalter kann ein Bügel oder ein Kunststoffkörper sein, der an der ersten Tragplatte des Zentralbeins befestigt ist, bzw. gegebenenfalls den Hilfsbeinen zugeordnet ist.

Nachfolgend wird die Erfindung anhand der in der Zeichnung dargestellten Figuren näher erläutert. Es zeigen
- Fig. 1: ein Stativ in Seitenansicht;
- Fig. 2 (a) und (b): Querschnittsdarstellungen einer ersten Ausführungsform der Verriegelungsmittel;
- Fig. 3 (a) und (b): Querschnittsdarstellungen einer zweiten Ausführungsform der Verriegelungsmittel;
- Fig.4(a),4(b) bis Fig.8(a),8(b): Querschnittsdarstellungen weiterer Ausführungsformen;
- Fig.9(a) und (b): eine Ansicht und ein Vertikalschnitt des oberen Endes eines Stativbeins mit Beinkappe und Arretierung.

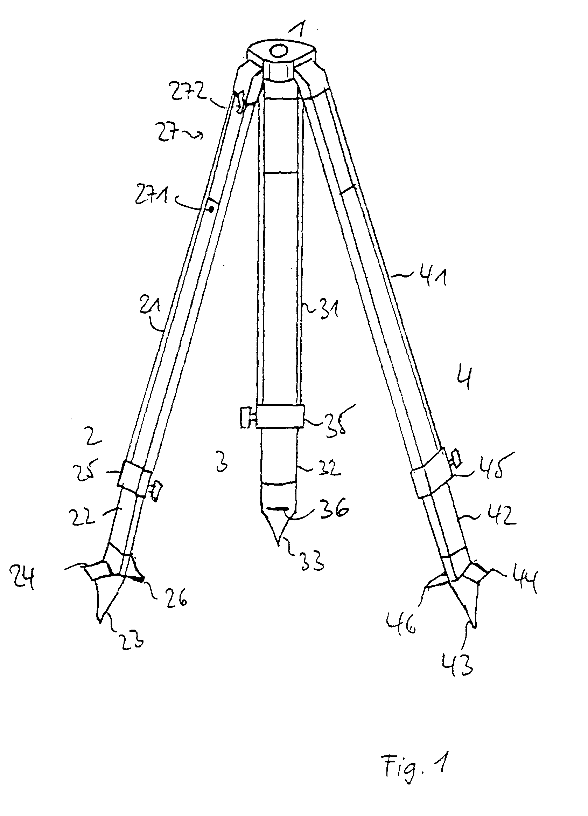

Fig. 1 zeigt ein Dreibeinstativ. An einem Stativkopf 1 sind drei Beine 2, 3, 4 schwenkbar befestigt. Jedes der Beine weist einen oberen Teil 21, 31, 41 auf, welcher jeweils am Stativkopf 1 drehbar befestigt ist. Die oberen Teile 21, 31, 41 bilden eine Führung, in der jeweils ein unterer Teil 22, 32, 42 teleskopartig verschiebbar angeordnet ist. Am unteren Ende der unteren Teile 22, 32, 42 setzen sogenannte Stiefel 23, 33, 43 an, welche auf dem Boden aufgesetzt werden. Die Stiefel haben zugespitzte Enden und umfassen eine Trittfläche 24, 34, 44, so dass der Stiefel von einer Bedienperson ins Erdreich eingetreten werden kann.

Im Gebrauch werden die unteren Teile aus den oberen Teilen der Stativbeine bis auf eine gewünschte Länge ausgezogen und über eine Klemmvorrichtung fixiert. Zur Klemmung dient ein am unteren Ende des oberen Teils des jeweiligen Stativbeins angebrachtes, sogenanntes Klemmband 25, 35, 45, welches das jeweilige Bein umgreift. Durch eine Feststellschraube am Klemmband werden unterer und oberer Teil des Beins aufeinander gepresst und bilden eine reibschlüssige Verbindung. Auf dem Stativkopf 1 kann dann ein Dreifuss aufgesetzt, horizontal ausgerichtet und zur Aufnahme beispielsweise eines geodätischen Instruments für Vermessungsaufgaben vorbereitet werden.

Zum Transport des Stativs werden die Feststellschrauben der Klemmbänder 25, 35, 45 gelöst und die unteren Teile in die oberen Teile der Stativbeine teilweise eingeschoben. Die drei Stativbeine werden eingeschwenkt, vollständig eingefahren und miteinander verriegelt. Im verriegelten Zustand sind die unteren Teile der Stativbeine gegen Ausfahren aus den oberen Teilen und ausserdem gegen ein Ausschwenken um die am Stativkopf befindliche Drehachse gesichert. Das verriegelte Stativ ist dann kompakt transportierbar.

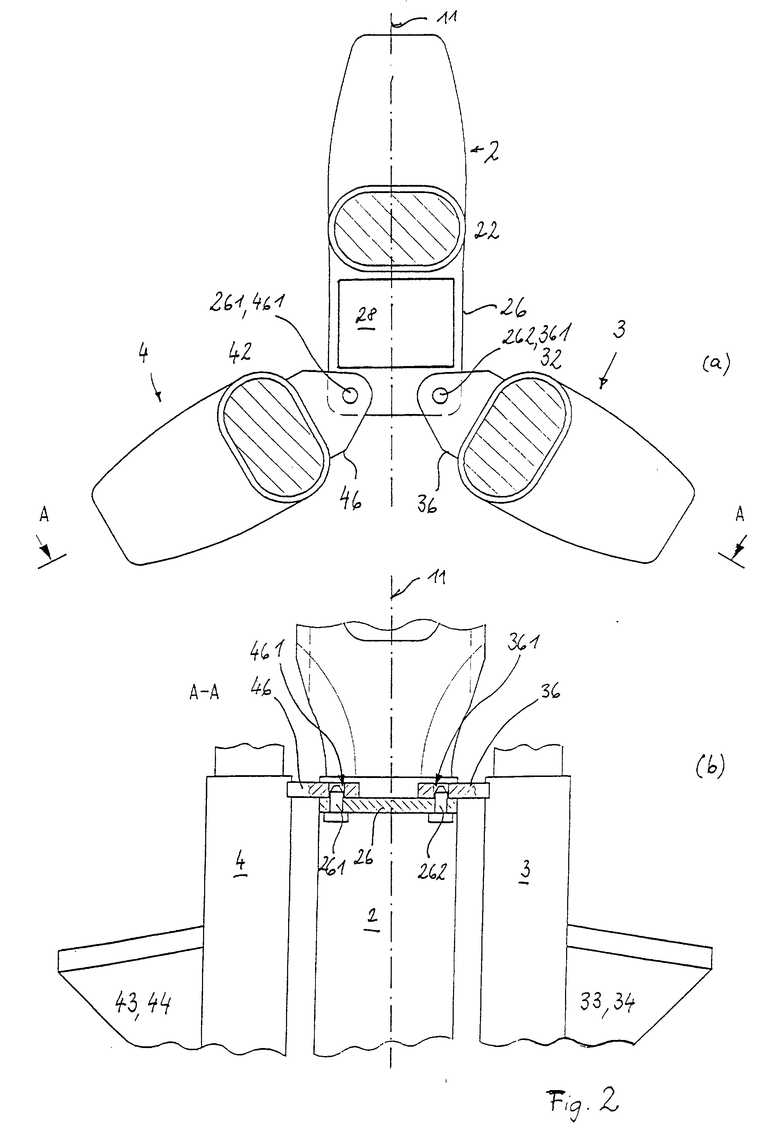

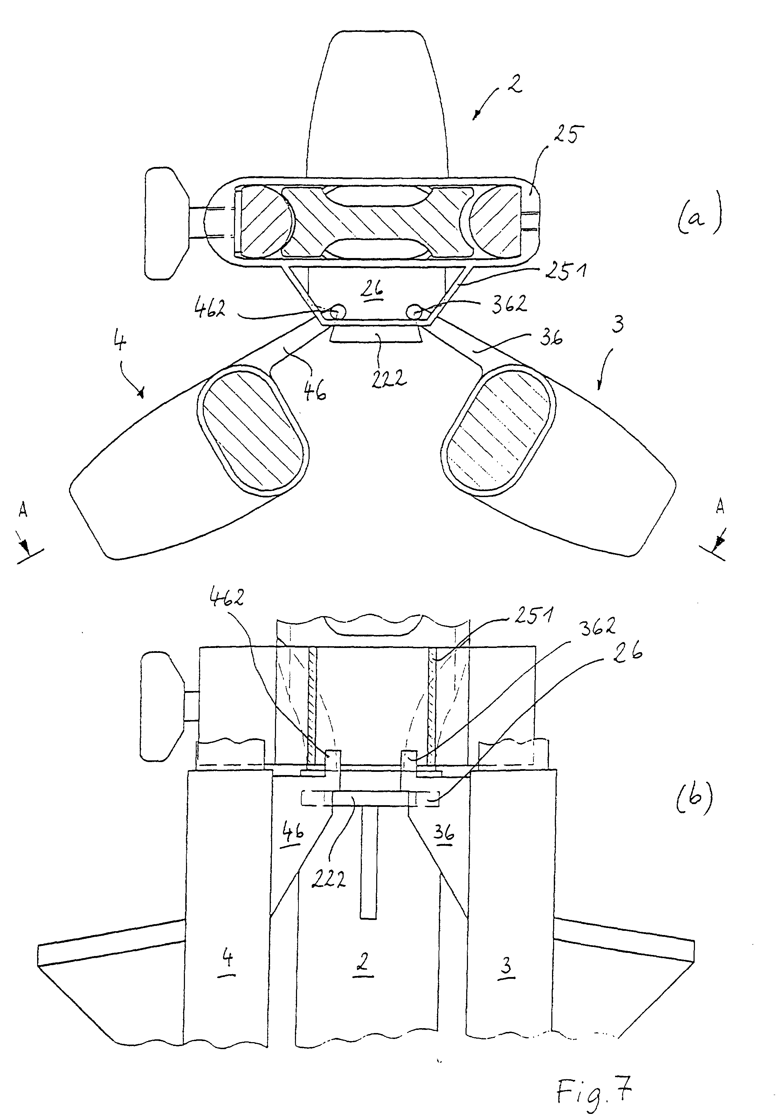

Erfindungsgemäss sind zur sicheren und bedienerfreundlichen Verriegelung an den bzw. nahe den Stativstiefeln 23, 33, 43 jeweilige Tragplatten 26, 36, 46 befestigt. Die Tragplatten 26, 36, 46 liegen an den den Trittflächen 24, 34, 44 gegenüber liegenden Seiten der Stiefel, d.h. die Tragplatten sind in Richtung der Stativmitte zu den jeweils anderen Stativbeinen hin gerichtet. Ausführungsformen für Tragplatten sind in den Figuren 2 bis 8 im Detail dargestellt. Entsprechende Elemente sind mit gleichen Bezugszeichen versehen. Bei einer ersten Ausführungsform zeigt Fig. 2 (a) einen horizontalen Querschnitt durch die Stativbeine nach Verriegelung im Transportzustand, Fig. 2 (b) einen vertikalen Schnitt längs der Schnittlinie A-A der Fig. 2(a). Eine erste Tragplatte 26 des Stativbeins 2 weist zwei Zapfen 261, 262 auf. Die hervortretenden Enden der Zapfen sind nach oben in Richtung des Stativkopfs 1, gerichtet. Die erste Tragplatte ist hier rechteckförmig ausgebildet. Die Zapfen 261, 262 befinden sich im Bereich der vom unteren Teil 22 des Stativbeins 2 abgewandt liegenden Ecken der ersten Tragplatte. Die erste Tragplatte ist senkrecht zur Längsrichtung des unteren Teils 22 des Stativbeins 2 gerichtet. Die weiteren Tragplatten 36, 46 an den Stiefeln 33, 43 der Stativbeine 3, 4 weisen endseitig jeweilige Bohrungen 361 beziehungsweise 461 auf. Bohrungen und Zapfen sind relativ zueinander derart angebracht, dass im eingeschwenkten Zustand der Stativbeine die Zapfen 261, 262 in die Bohrungen 461 beziehungsweise 361 eingreifen. Die weiteren Tragplatten 36, 46 der Stativbeine 3, 4 sind zueinander gleich ausgebildet. Demgegenüber weicht die erste Tragplatte 26 des Zentralbeins 2 in Form und Positionierung am Stiefel ab. Die Verriegelungsmittel sind zwar bezüglich der Symmetrieachse 11 symmetrisch ausgebildet. Eine Punktsymmetrie reihum derart, dass die Verriegelungsmittel wie beim Stand der Technik an allen drei Beinen identisch wären, liegt nicht vor. Das Stativbein 2 wird daher im folgenden als Zentralbein bezeichnet, die anderen Beine 3, 4 als Hilfsbeine.

Um ausgehend von der in Fig. 1 dargestellten Arbeitsstellung des Stativs den Transportzustand herzustellen, ist folgende Handhabung erforderlich. Eines der Klemmbänder der Hilfsbeine 3, 4, z.B. das Klemmband 35, wird gelöst, so dass der untere Teil 32 in den oberen Teil 31 des Hilfsbeins 3 eingeschoben werden kann. Das Stativbein 3 wird zum Zentralbein 2 hin eingeschwenkt. Der untere Teil 32 wird angehoben, um eine weitere Tragplatte 36 eines Hilfsbeins auf die Tragplatte 26 des Zentralbeins 2 aufzusetzen und um dabei die Bohrung 361 auf den Zapfen 262 aufzusetzen. Anschliessend wird das Klemmband 45 des Hilfsbeins 4 gelöst. In entsprechender Weise wird die Bohrung 461 auf den Zapfen 261 gesetzt. Die Klemmbänder 35, 45 bleiben gelockert. Nunmehr wird das Klemmband 25 des Zentralbeins gelöst. Alle unteren Teile 22, 32, 42 fahren vollständig in die oberen Teile 21, 31, 41 der Stativbeine ein. Abschliessend wird noch der untere Teil 22 des Zentralbeins arretiert. Hierzu ist zweckmässigerweise ein punktdiskrete Arretierung 27 am oberen Ende des Zentralbeins 2 vorgesehen. Dieser umfasst einen Vorsprung 271, der am oberen Ende des unteren Teils 22 des Zentralbeins 2 angebracht ist, und eine Federklammer 272, die am oberen Ende des oberen Teils 21 des Zentralbeins 2 befestigt ist und die eine Aussparung aufweist. Der untere Teil 21 wird soweit eingefahren, bis der Vorsprung 271 in der Aussparung der Federklammer 272 einrastet. Es genügt, den unteren und oberen Teil 22, 21 des Zentralbeins 2 vermittels des Verschlusses 27 zu arretieren. Damit sind gleichzeitig auch die Hilfsbeine 3, 4 gegen Ausfahren und Ausschwenken verriegelt, da die jeweiligen Zapfen 261, 262 in den Bohrungen 461 beziehungsweise 361 eingreifend gehalten werden. Gegebenenfalls kann das Klemmband 25 am Zentralbein festgezogen werden, um die Sicherheit der Verriegelung gegen ein unbeabsichtigtes Lösen der Arretierung 27 zu erhöhen. Die Tragplatten sind relativ zueinander derart an den jeweiligen Stiefeln befestigt, dass im eingefahrenen Zustand die Tragplatten 36, 46 der Hilfsbeine 3, 4 auf der Tragplatte 26 des Zentralbeins 2 von oben her aufliegen. Die Länge der unteren Teile 32, 42 der Hilfsbeine 3, 4 ist derart bemessen, dass sie im Transportzustand vollständig eingefahren sind, so dass die jeweiligen Tragplatten 36, 46 fest auf der Tragplatte 26 des Zentralbeins aufsetzen und Zapfen und Bohrungen in sicherem gegenseitigem Eingriff stehen. Zur Inbetriebnahme des Stativ sind die oben beschriebenen Handgriffe in umgekehrter Reihenfolge auszuführen.

Für eine sichere Arretierung reicht prinzipiell ein Einrasten der Arretierung 27 am oberen Ende des Zentralbeins 2. Die Verund Entriegelung der Arretierung 27 kann stets bei aufrechter Haltung der Bedienperson ausgeführt werden. Da - abgesehen von der optionalen Klemmung des Klemmbands 27 zur Erhöhung der Verriegelungssicherheit - die Klemmbänder 25, 35, 45 zur Herstellung des Transportzustands beziehungsweise zur Wiederinbetriebnahme nicht bedient zu werden brauchen, wenn die Stativbeine eingeschwenkt sind, können die jeweiligen Klemmschrauben grösser ausgeführt werden. Deren Betätigung ist insbesondere auch bei kalter Witterung einfacher und leichter, da das Drehmoment vergrössert wird, die Sicherheit gegen ungewolltes Einrutschen eines Teleskopbeines wird vergrössert.

Zweckmässigerweise wird auf der ersten Tragplatte 26 des Zentralbeins ein Abstandsstück 28 angeordnet. Hierzu kann ein Bügel oder ein Kunststoffquader vorgesehen sein. Das Abstandsstück 28 verhindert ein zu tiefes Einschwenken der Hilfsbeine 3, 4 und einen Zusammenstoss der ersten Tragplatte 26 des Zentralbeins mit den Hilfsbeinen.

Anstelle der in Fig. 2 (a) und 2 (b) dargestellten Anordnung von Zapfen und Bohrungen an den Tragplatten ist es auch möglich, anstelle der Zapfen in der ersten Tragplatte 26 des Zentralbeins 2 Bohrungen und anstelle der Bohrungen in den weiteren Tragplatten der Hilfsbeine 3, 4 Zapfen vorzusehen. Letztere Zapfen sind dann nach unten, d.h. vom Stativkopf weg in Richtung der Bohrungen, orientiert. Zum Herstellen des Transportzustands werden die Hilfsbeine nacheinander eingeschwenkt und die Zapfen in den Bohrungen der ersten Tragplatte des Zentralbeins eingesetzt. Die übrigen Elemente sowie die übrige Handhabung entspricht obigen Ausführungen.

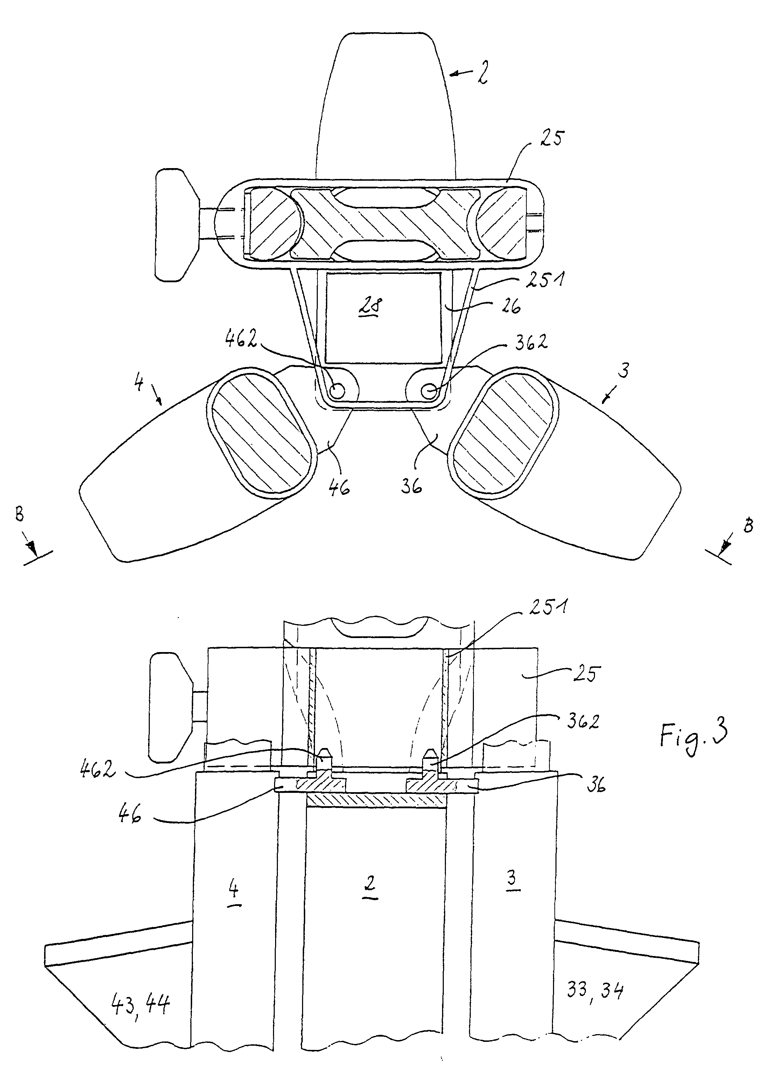

Die Fig. 3 zeigt eine alternative Ausführung der Verriegelungsmittel. In Fig. 3 (a) ist ein horizontaler Querschnitt durch die Stativbeine im Transportzustand dargestellt, wobei die Schnittebene bei den Hilfsbeinen 3, 4 unmittelbar oberhalb der an den Stiefeln angebrachten weiteren Tragplatten liegt, während die Schnittebene beim Zentralbein 2 auf Höhe des Klemmbands 25 liegt. Fig. 3 (b) zeigt einen vertikalen Querschnitt längs der Schnittlinie B-B der Fig. 3 (b). Die erste Tragplatte 26 weist in dieser Ausführung weder Bohrungen noch Zapfen auf. Auf der ersten Tragplatte 26 liegen die weiteren Tragplatten 36, 46 der Hilfsbeine. An den weiteren Tragplatten 36, 46 sind jeweilige Zapfen 362, 462 ausgebildet, die nach oben, d.h. in Richtung des Stativkopfes 1, weisen. Im Transportzustand umgreift ein Bügel 251 die Zapfen 362, 462. Der Bügel 251 ist am Klemmband 25 des Zentralbeins 2 befestigt. Zweckmässigerweise setzt der Verriegelungsbügel 251 einstückig am Klemmband 25 an und besteht aus dem gleichen Material. Der Verriegelungsbügel 251 ist vom Zentralbein 2 weg gerichtet und umgibt eine Öffnung. In der gezeigten Ausführung ist der Bügel senkrecht zum Zentralbein gerichtet.

Zum Herstellen des Transportzustands werden die Hilfsbeine 3, 4 eingeschwenkt und deren jeweilige Tragplatten 36, 46 auf die Tragplatte 26 des Zentralbeins gesetzt. Der Abstandshalter 28 hält die Stativbeine 3, 4 in ausreichendem Abstand vom Zentralbein 2. Nach dem Lösen des Klemmbands 25 am Zentralbein 2 wird der Verriegelungsbügel 251 über die Zapfen 362, 462 gefahren. Der Bügel 251 befindet sich in Einfahrstellung oberhalb und beabstandet von der Tragplatte 26 des Zentralbeins, so dass die Zapfen 362, 462 an den anderen Tragplatten vom Bügel 251 umfasst werden, wobei die Tragplatten 36, 46 zwischen Bügel 251 und erster Tragplatte 26 liegen.

Die in Fig. 3 gezeigt Ausführungsform kann mit den oben in Zusammenhang mit Fig. 2 beschriebenen Ausführungsformen kombiniert werden.

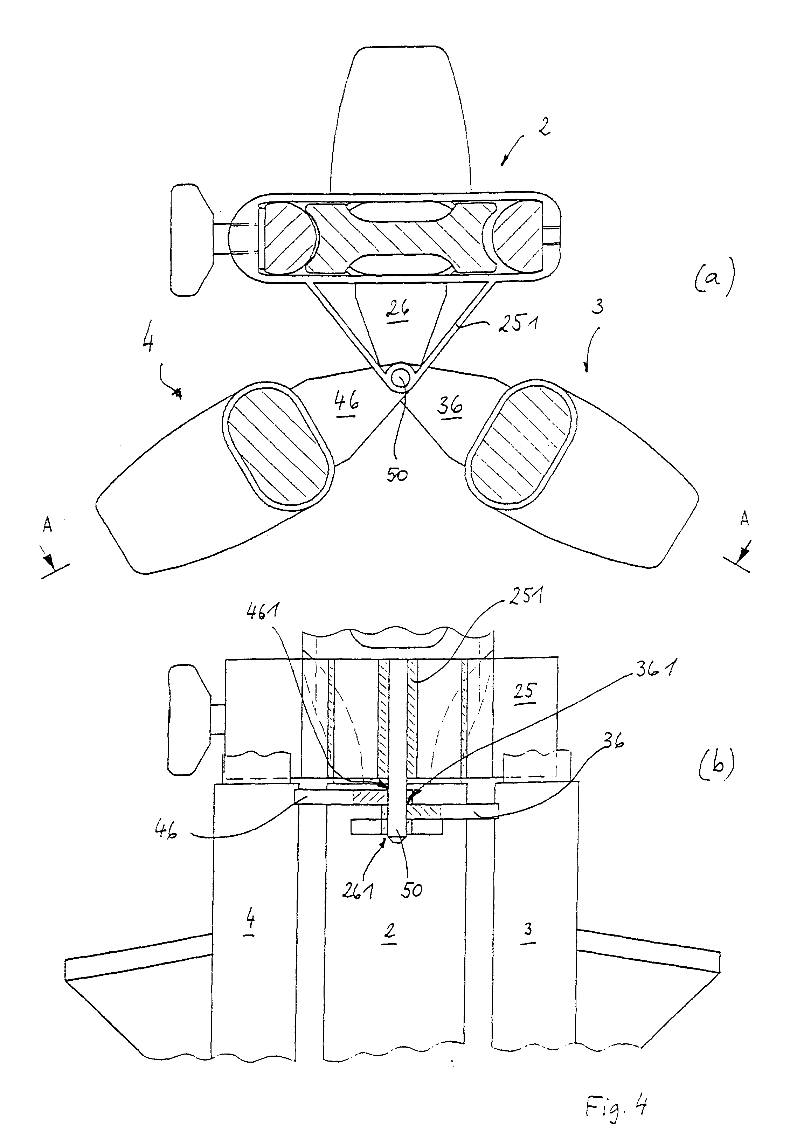

In den Figuren 4 bis 8 werden weitere Ausführungsvarianten für Verriegelungsmittel jeweils in einem Horizontal- und einem Vertikalschnitt entlang der Schnittlinie A-A des Horizontalschnitts gezeigt.

In Fig.4 (a) und (b) ist am Klemmband 25 des Zentralbeins 2 ein Verriegelungsbügel 251 vorgesehen, der einen nach unten ragenden Dorn 50 trägt und der in Tragstellung durch Bohrungen 261, 361 und 461 ragt, die in der ersten, zuunterst liegenden Tragplatte 26 des Zentralbeins 2 und den weiteren Tragplatten 36 und 46 der Hilfsbeine 3 und 4 vorgesehen sind.

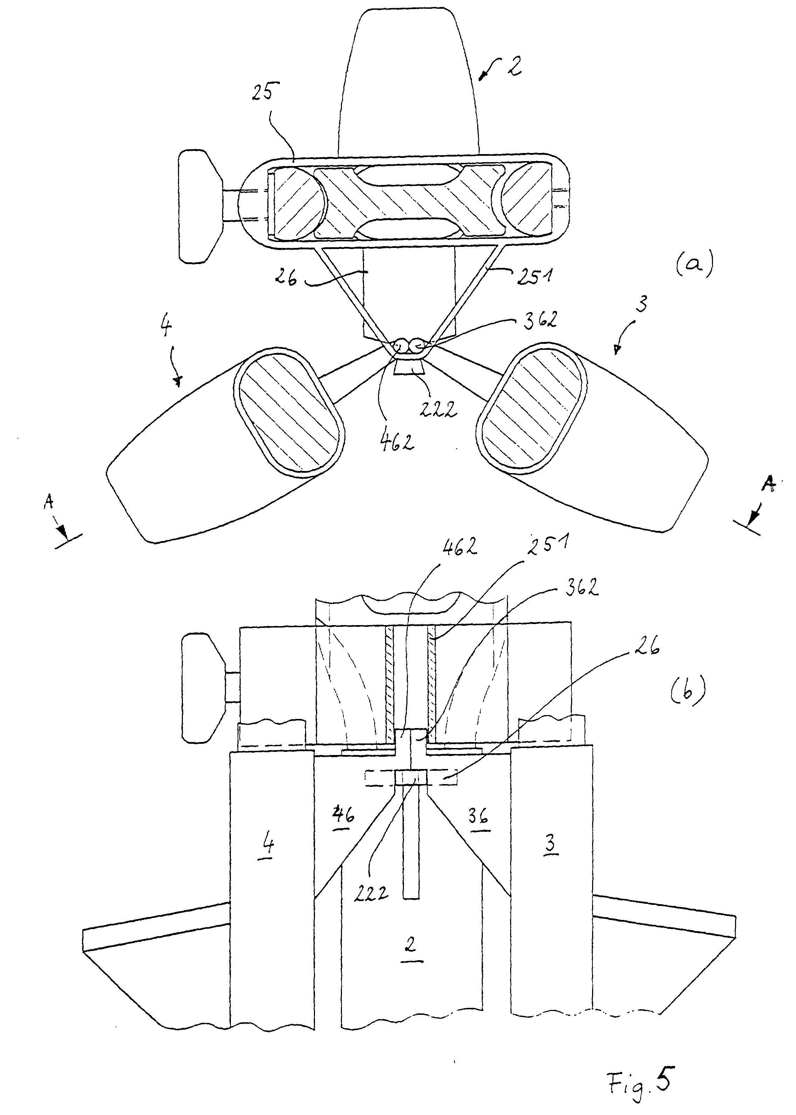

Die Figuren 5 bis 7 zeigen ähnliche Ausführungsformen, wobei an den weiteren Tragplatten 36 und 46 der Hilfsbeine 3 und 4 vorgesehene, nach oben ragende Zapfen 362 und 462 in die durch den Verriegelungsbügel 251 gegebene Öffnung ragen, wodurch die Hilfsbeine 3 und 4 gegen das Auseinanderfallen in Transportstellung gesichert sind, während die Vertikalpositionierung der Hilfsbeine 3, 4 über die erste Tragplatte 26 gesichert wird, die mit einer Nase 222 formschlüssig in Ausnehmungen an den weiteren Tragplatten - insbesondere an deren Unterseite - eingreift. Die weiteren Tragplatten können dabei bezüglich der jeweiligen Beinachse zentriert oder auch dezentriert angeordnet sein.

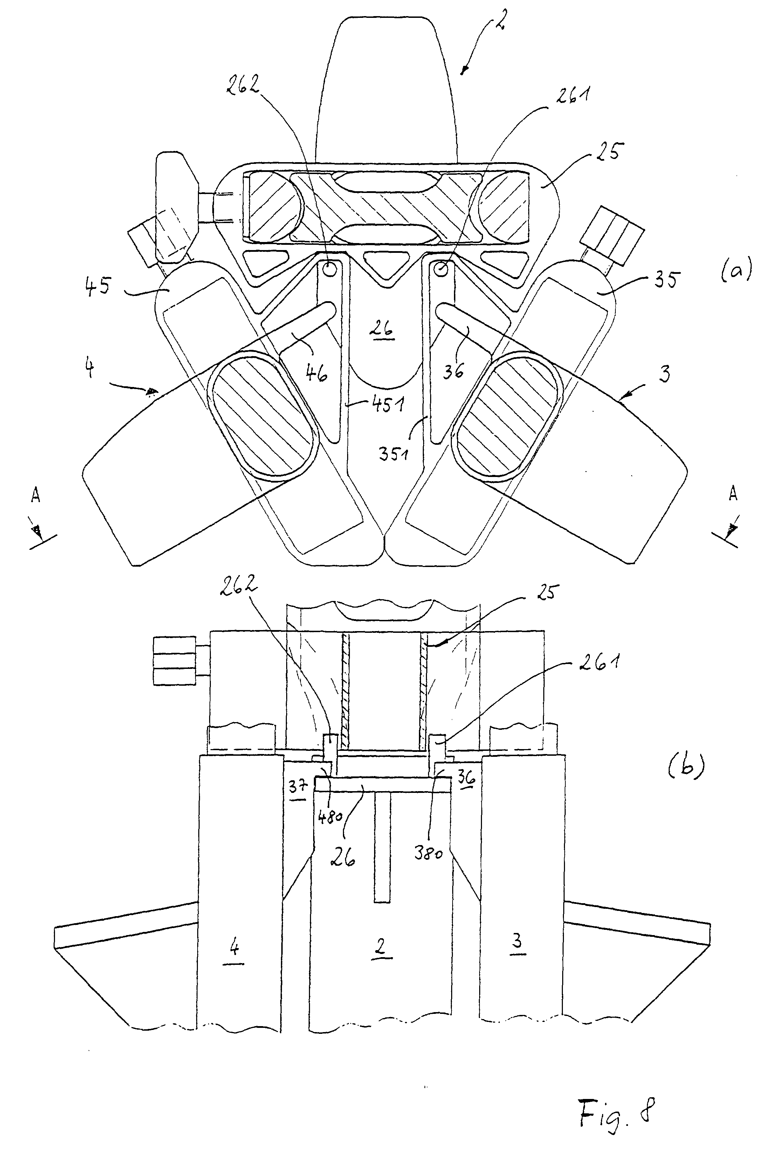

Fig. 8 zeigt eine weitere Ausbildungsvariante, bei der - ähnlich derjenigen der Fig.2 - nach oben weisende Zapfen 261, 262 an der ersten Tragplatte 26 vorgesehen sind, welche in Öffnungen an Verriegelungsbügeln 351 und 451 eingreifen, die an den Klemmbändern 35 und 45 der Hilfsbeine 3 und 4 vorgesehen sind. Die weiteren Tragplatten 36 und 46 sitzen mit Vorsprüngen 380 und 480 auf der ersten Tragplatte 26 auf, wodurch die Sicherung gegen das Herausrutschen der Hilfsbeine in Transportstellung gegeben ist, während über Zapfen 261, 262 und Verriegelungsbügel 351, 451 die Sicherung gegen ungewünschtes Verschwenken erreicht wird. Die Verriegelungsbügel 351, 451 sind derart ausgebildet, dass sie gleichzeitig als Anschlag gegen das Klemmband 25 des Zentralbeins 2 dienen.

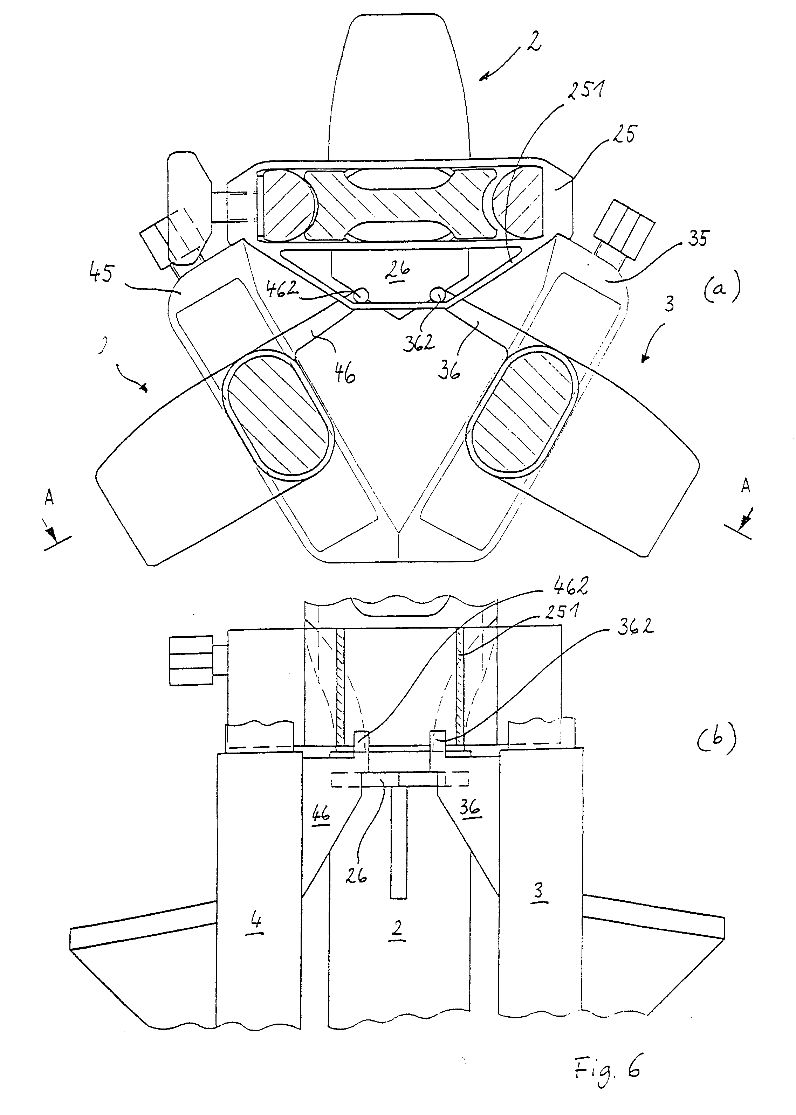

Bei der in Fig.8 dargestellten Anordnung - hier sind die Klemmschrauben zweier Klemmbänder in Transportstellung des Stativs im wesentlichen übereinander positioniert - wird, ähnlich wie bei der Ausbildung nach Fig.6, die Kreissymmetrie der drei Beine gebrochen. Das geschlossene Stativ ist für Transportstellung im Liegen in einer Lage relativ lagestabil ausgebildet und wird - beispielsweise bei Transport in einem Fahrzeug - weniger leicht ins Rollen geraten.

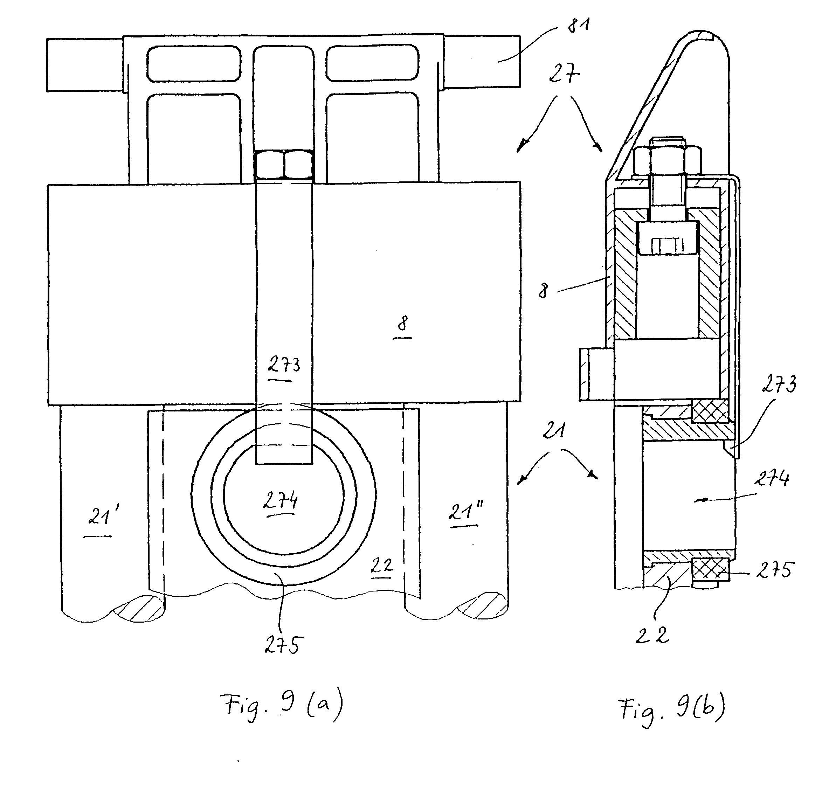

In Figur 9 (a) und 9 (b) ist eine Möglichkeit für die Ausbildung einer Arretierung 27 dargestellt, wie er am oberen Teil 21 des Zentralbeins 2 vorgesehen werden kann. Es versteht sich, dass - obwohl wie oben dargestellt, ein einziger solcher Verschluss am Zentralbein 2 genügend ist - auch an den beiden anderen Beinen derartige Verschlüsse zusätzlich vorgesehen werden könnten.

Am oberen Ende des Zentralbeins 2 ist - wie auch an den anderen Beinen 3 und 4 - eine Beinkappe 8 vorgesehen, die im Stativkopf 1 über eine Achse 81 schwenkbar gelagert ist. Die Beinkappe 8 sitzt am oberen Ende des oberen Teils 21, das aus zwei stangenförmige Tragstützen 21' und 21" besteht, zwischen denen der untere Teil 22 des Zentralbeins 2 teleskopartig verschieblich ist. In Transportstellung ist der untere Teil 22 vollständig in den oberen Teil 21 eingeschoben - und diese Situation ist in Fig. 9 (a) und (b) dargestellt.

Anstelle der bekannten Federklammer 272 der Fig. 1 ist hier eine Schnappfeder 273 vorgesehen, die - im Gegensatz zu der Federklammer 272 - an der Innenseite der Beinkappe 8 angeordnet ist. Damit wird die Möglichkeit unterbunden, dass bei gegebenenfalls unter rauhen Bedingungen erfolgendem Transport oder auch bei Aufnehmen des Stativs die Feder ungewollt gelöst werden könnte. Die Federklammer greift in eine am oberen Ende des unteren Teils 21 vorgesehene Öffnung 274 ein, die gross genug gehalten ist, dass der Finger einer Bedienperson bequem durchgreifen kann. Damit kann nicht nur gegebenenfalls die Schnappfeder 273 gelöst werden, sondern auch die Teleskopverstellung der Beine durch die Bedienperson einfingrig vorgenommen werden. Ein den Anschlag des unteren Teils 21 gegen die Beinkappe 8 des oberen Teils 22 - beim Zusammenfahren - bzw. gegen das Klemmband 25 des oberen Teils 22 - bei Maximalauszug - dämpfender Polster kann beispielsweise in Form eines um diese Öffnung 274 angeordneten Ringes 275 aus Gummi vorgesehen sein.

Durch die Erfindung wird in einfacher Weise eine sichere Verriegelung der Beine eines Stativs ermöglicht, indem mittels eines einzigen Verschlusses sowohl ein radiales Ausschwenken der Beine als auch ein vertikales Ausfahren verhindert wird. Die Bedienung der Verriegelung kann von einer Bedienperson in aufrechter Haltung ausgeführt werden.

## Patentansprüche

1. Stativ, mit folgenden Teilen:
- mindestens drei Beine (2, 3, 4), die - in Verwendungsstellung - jeweils einen oberen Teil (21, 31, 41) aufweisen, der an einem Stativkopf (1) schwenkbar befestigt ist, und einen unteren Teil (22, 32, 42), der gegen den oberen Teil (21 , 31 , 41) teleskopartig verstellbar ist, **gekennzeichnet durch**:
- eine erste Tragplatte (26), die am unteren Teil (21) eines ersten Beins (2) befestigt ist, und je eine weitere Tragplatte (36, 46), die am unteren Teil (32, 42) der anderen Beine (3, 4) befestigt ist, wobei die weiteren Tragplatten (36, 46) mit der ersten Tragplatte (26) mittel- oder unmittelbar in Eingriff stehen, wenn die unteren Teile (22, 32, 42) der Beine (2, 3, 4) gegenüber den oberen Teilen (21, 31, 41) in einer der Transportstellung des Stativs entsprechenden Einfahrstellung eingefahren sind.

2. Stativ nach Anspruch 1, **dadurch gekennzeichnet, dass** wenigstens eine am ersten Bein (2) - gegebenenfalls auch an den anderen Beinen (3, 4) - befestigte Arretierung (27) vorgesehen ist, durch die der untere Teil (22) des ersten Beins (2) bzw. der anderen Beine (3, 4)in Einfahrstellung im jeweils oberen Teil (21) eingefahren feststellbar ist.

3. Stativ nach Anspruch 1 oder 2, **dadurch gekennzeichnet, dass** die erste Tragplatte (26) wenigstens einen zum Stativkopf (1) hin gerichteten Vorsprung (261, 262) aufweist und dass wenigstens eine der weiteren Tragplatten (36, 46) eine zugeordnete Aussparung (461, 361) aufweist, so dass in Einfahrstellung der Vorsprung (261, 262) in die Aussparung (461, 361) eingreift.

4. Stativ nach Anspruch 1 oder 2, **dadurch gekennzeichnet, dass** wenigstens eine der weiteren Tragplatten (36, 46) wenigstens einen vom Stativkopf (1) weg gerichteten Vorsprung aufweist und dass die erste Tragplatte (26) und gegebenenfalls die andere weitere Tragplatte zugeordnete Aussparungen aufweist, so dass in Einfahrstellung die Vorsprünge in die Aussparungen eingreifen.

5. Stativ nach Anspruch 1 oder 2, **dadurch gekennzeichnet, dass** die weiteren Tragplatten (36, 46) zum Stativkopf (1) hin gerichtete Vorsprünge (462, 362) aufweisen, die - in Einfahrstellung - in einen am oberen Teil (21) des ersten Beins (2) befestigten Bügel (251) eingreifen.

6. Stativ nach Anspruch 5, **dadurch gekennzeichnet, dass** der Bügel (251) eine Öffnung umschliesst und vom ersten Bein (2) weg gerichtet ist, wobei der Bügel (251) am unteren Ende des oberen Teils (21) des ersten Beins (2) befestigt ist und in Einfahrstellung oberhalb der ersten Tragplatte (26) derart beabstandet angeordnet ist, dass die Vorsprünge (362, 462) der weiteren Tragplatten (36, 46) in die vom Bügel (251) umschlossene Öffnung eingreifen.

7. Stativ nach einem der Ansprüche 3 bis 6, **dadurch gekennzeichnet, dass** die Vorsprünge (261, 262, 462, 362) Zapfen sind und die Aussparungen (461, 361) in den jeweiligen Tragplatten angeordnete Bohrungen sind.

8. Stativ nach einem der Ansprüche 2 bis 7, **dadurch gekennzeichnet, dass** die Arretierung (27) an dem zum Stativkopf (1) hin gerichteten Ende des oberen und unteren Teils (21, 22) des jeweiligen Beins (2) angebracht ist.

9. Stativ nach Anspruch 8, **dadurch gekennzeichnet, dass** die Arretierung (27) als ein punktdiskreter Verschluss aus einer Federklammer (272) mit Aussparung und einem Vorsprung (271) bzw. als Schnappfeder (273) und Öffnung (274) ausgebildet ist, die ineinander eingreifen, wenn der untere Teil (22) in den oberen Teil (21) eingefahren ist, und dass insbesondere die Federklammer (272) bzw. die Schnappfeder (273) am oberen Teil (21) des ersten Beins (2) - gegebenenfalls an dessen Innenseite - angeordnet ist und der Vorsprung (271) bzw. die Öffnung am unteren Teil (22).

10. Stativ nach einem der Ansprüche 1 bis 9, **dadurch gekennzeichnet, dass** die unteren Teile (22, 32, 42) der Beine (2, 3, 4) jeweils Stiefel (23, 33, 43) zum Aufsetzen auf den Boden aufweisen und dass die Tragplatten (26, 36, 46) im Bereich der Stiefel (23, 33, 43) angeordnet sind.

11. Stativ nach einem der Ansprüche 1 bis 10, **dadurch gekennzeichnet, dass** der ersten Tragplatte (26) ein Abstandshalter (28) zugeordnet ist, durch den die weiteren Tragplatten (36, 46) vom unteren Teil (21) des ersten Beins (2) beabstandet gehalten werden.

## Claims

1. Tripod comprising the following parts:
- at least three legs (2, 3, 4) which - in the position of use - each have an upper part (21, 31, 41) which is pivotably fastened to a tripod head (1), and a lower part (22, 32, 42) which is telescopically adjustable relative to the upper part (21, 31, 41), **characterized by**:
- a first support plate (26) which is fastened to the lower part (21) of a first leg (2), and one further support plate (36, 46) each, which is fastened to the lower part (32, 42) of the other legs (3, 4), the further support plates (36, 46) indirectly or directly engaging the first support plate (26) when the lower parts (22, 32, 42) of the legs (2, 3, 4) have been retracted relative to the upper parts (21, 31, 41) into a retracted position corresponding to the transport position of the tripod.

2. Tripod according to Claim 1, **characterized in that** at least one locking means (27) fastened to the first leg (2) - optionally also to the other legs (3, 4) - is provided, by means of which the lower part (22) of the first leg (2) or of the other legs (3, 4) can be fixed in the retracted position in the respective upper part (21).

3. Tripod according to Claim 1 or 2, **characterized in that** the first support plate (26) has at least one projection (261, 262) directed towards the tripod head (1), and that at least one of the further support plates (36, 46) has a coordinated recess (461, 361) so that, in the retracted position, the projection (261, 262) engages the recess (461, 361).

4. Tripod according to Claim 1 or 2, **characterized in that** at least one of the further support plates (36, 46) has at least one projection directed away from the tripod head (1), and that the first support plate (26) and optionally the other further support plate have coordinated recesses so that, in the retracted position, the projections engage the recesses.

5. Tripod according to Claim 1 or 2, **characterized in that** the further support plates (36, 46) have projections (462, 362) which are directed towards the tripod head (1) and - in the retracted position - engage a bracket (251) fastened to the upper part (21) of the first leg (2).

6. Tripod according to Claim 5, **characterized in that** the bracket (251) encloses an orifice and is directed away from the first leg (2), the bracket (251) being fastened to the lower end of the upper part (21) of the first leg (2) and, in the retracted position, being arranged a distance away above the first support plate (26) in such a way that the projections (362, 462) of the further support plates (36, 46) engage the orifice enclosed by the bracket (251).

7. Tripod according to any of Claims 3 to 6, **characterized in that** the projections (261, 262, 462, 362) are pegs, and the recesses (461, 361) are holes arranged in the respective support plates.

8. Tripod according to any of Claims 2 to 7, **characterized in that** the locking means (27) is mounted on that end of the upper and lower part (21, 22) of the respective leg (2) which is directed towards the tripod head (1).

9. Tripod according to Claim 8, **characterized in that** the locking means (27) is in the form of a discrete point lock comprising a spring clip (272) having a recess and a projection (271) or in the form of a snap spring (273) and orifice (274), which engage one another when the lower part (22) is retracted into the upper part (21), and that in particular the spring clip (272) or the snap spring (273) is arranged on the upper part (21) of the first leg (2) - optionally on the inside thereof - and the projection (271) or the orifice is arranged on the lower part (22).

10. Tripod according to any of Claims 1 to 9, **characterized in that** the lower parts (22, 32, 42) of the legs (2, 3, 4) each have boots (23, 33, 43) for placing on the ground, and that the support plates (26, 36, 46) are arranged in the region of the boots (23, 33, 43).

11. Tripod according to any of Claims 1 to 10, **characterized in that** a spacer (28) by means of which the further support plates (36, 46) are kept a distance away from the lower part (21) of the first leg (2) is coordinated with the first support plate (26).

## Revendications

1. Pied, comprenant les parties suivantes :
- au moins trois pattes (2, 3, 4), présentant - en position d'utilisation - chacune une partie supérieure (21, 34, 41), fixée à pivotement sur une tête de pied (1), et une partie inférieure (22, 32, 42), réglable de façon télescopique par rapport à la partie supérieure (21, 31, 41), **caractérisé par** :
- une première plaque support (26), fixée à la partie inférieure (21) d'une première patte (2) et, respectivement une autre plaque support (36, 46), fixée à la partie inférieure (32, 42) des autres pattes (3, 4), les autres plaques support (36, 46) étant en prise indirecte ou directe avec la première plaque support (26), lorsque les parties inférieures (22, 32, 42) des pattes (2, 3, 4) sont rétractées en une position de rétractation correspondant à la position de transport du pied, par rapport aux parties supérieures (21, 31, 41).

2. Pied selon la revendication 1, **caractérisé en ce qu'**au moins un dispositif d'arrêt (27), fixé à une première patte (2) - le cas échéant également aux autres pattes (3, 4), est prévu, dispositif d'arrêt au moyen duquel la partie inférieure (22) de la première patte (2), respectivement des autres pattes (3, 4), peut être fixée en étant rétractée à la position de rétractation, chaque fois dans la partie supérieure (21).

3. Pied selon la revendication 1 ou 2, **caractérisé en ce que** la première plaque support (21) présente au moins une saillie (261, 262), orientée vers la tête de pied (1), et **en ce qu'**au moins l'une des autres plaques support (36, 46) présente un évidement (461, 361) associé, de sorte que, à la position rétractée, la saillie (261, 262) s'engage dans l'évidement (461, 361).

4. Pied selon la revendication 1 ou 2, **caractérisé en ce qu'**au moins l'une des autres plaques support (36, 46) présente au moins une saillie s'écartant de la tête de pied (1), et **en ce que** la première plaque support (26) et, le cas échéant, l'autre plaque support supplémentaire présente des évidements associés, de sorte que, à la position rétractée, les saillies s'engagent dans les évidements.

5. Pied selon la revendication 1 ou 2, **caractérisé en ce que** les autres plaques support (36, 46) présentent des saillies (462, 362), orientées vers la tête de pied (1), saillies qui - en position rétractée - s'engagent dans un étrier (251), fixé à la partie supérieure (21) de la première patte (2).

6. Pied selon la revendication 5, **caractérisé en ce que** l'étrier (251) entoure une ouverture et s'écarte de la première patte (2), l'étrier (251) étant fixé à l'extrémité inférieure de la partie supérieure (21) du premier pied (2) et, en position rétractée, est disposé au-dessus et à distance de la première plaque support (26), de manière que les saillies (362, 462) des autres plaques support (36, 46) s'engagent dans l'ouverture entourée par l'étrier (251).

7. Pied selon l'une des revendications 3 à 6, **caractérisé en ce que** les saillies (261, 262, 462, 362) sont des tétons et les évidements (461, 361) sont des perçages ménagés dans les plaques support respectives.

8. Pied selon l'une des revendications 2 à 7, **caractérisé en ce que** le dispositif d'arrêt (27) est monté sur l'extrémité, tournée vers la tête de pied (1), de la partie supérieure et de la partie inférieure (21, 22) de la patte (2) respective.

9. Pied selon la revendication 8, **caractérisé en ce que** le dispositif d'arrêt (27) est réalisé sous la forme de fermetures ponctuellement discrètes, formées d'une pince élastique (272), avec un évidemment, et d'une saillie (271), respectivement sous forme de ressort à déclic (273) et d'une ouverture (274), s'engageant l'un dans l'autre lorsque la partie inférieure (22) est rétractée dans la partie supérieure (21), et **en ce que**, en particulier la pince élastique (272), respectivement le ressort à déclic (273), est disposé(e) sur la partie supérieure (21) de la première patte (2) - le cas échéant sur sa face intérieure - et la saillie (272), respectivement l'ouverture, est disposée sur la partie inférieure (22).

10. Pied selon l'une des revendications 1 à 9, **caractérisé en ce que** les parties inférieures (22, 32, 42) des pattes (2, 3, 4) présentent chacune des embouts d'appui (23, 33, 43) pour la pose sur le sol, et **en ce que** les plaques support (23, 36, 46) sont disposées dans la zone des embouts d'appui (23, 33, 43).

11. Pied selon l'une des revendications 1 à 10, **caractérisé en ce qu'**à la première plaque support (26) est associé un élément d'espacement (28), au moyen duquel les autres plaques support (36, 46) sont maintenues à distance de la partie inférieure (21) de la première patte (2).
